# EUROPEAN PATENT APPLICATION

(11) **EP 4 838 358 A1**
(43) Date of publication of application: **11.11.2026**
(21) Application number: 24914977.4
(22) Date of filing: 28.10.2024
(51) Int. Cl.: G06F 9/48

(54) **SYSTEM RESOURCE LOADING METHOD AND APPARATUS, ELECTRONIC DEVICE, AND COMPUTER STORAGE MEDIUM**

(30) Priority: 03.01.2024 CN 202410011231
(71) Applicant: Shenzhen TCL Digital Technology Ltd., Shenzhen, Guangdong 518054 (CN)
(72) Inventor: NIU, Yanzhang, Hong Kong Cooperation Zone,No.1 Liyumen Street, Qianwan Road 1 Shenzhen, Guangdong 518054 (CN)
(74) Representative: Herrero & Asociados, S.L.
(86) International application number: PCT/CN2024/127727
(87) International publication number: WO 2025/145760

(57) **Abstract**

The present application relates to the technical field of terminals, and discloses a system resource loading method and apparatus, an electronic device, and a computer storage medium. The method comprises: dividing system resources into a plurality of grouping units; dividing the grouping units into a plurality of resource groups; and performing multi-thread loading in a loading process on the basis of the resource groups. The present application achieves accurate and efficient division of system resources, so that the starting speed of the system is accelerated and the starting duration of the system is shortened while the stable operation of the system is ensured.

## Description

This application claims priority to Chinese Patent Applications No. 202410011231.6, filed on January 3, 2024 and entitled "SYSTEM RESOURCE LOADING METHOD AND APPARATUS, ELECTRONIC DEVICE, AND COMPUTER STORAGE MEDIUM". The entire disclosures of the above application are incorporated herein by reference.

### TECHNICAL FIELD

The present application relates to the technical field of terminals, and in particular, to a system resource loading method, an apparatus, an electronic device, and a computer storage medium.

### BACKGROUND TECHNOLOGY

In various consumer electronic products such as televisions and set-top boxes, software systems, such as the Android system, are required to implement functions of corresponding hardware devices.

### Technical Problem

However, with continuous updates and expansion of various hardware functions and systems, the size of software systems has gradually increased. In addition, due to the highly customizable nature of software systems for users, a large number of system services and application programs are built into the system. Meanwhile, inherent hardware performance of embedded platforms is limited, resulting in an excessively long system startup time.

### SUMMARY OF INVENTION

Embodiments of the present application provide a system resource loading method, an apparatus, an electronic device, and a computer storage medium, which can solve the technical problem of excessively long system startup time in existing systems.

Embodiments of the present application provide a system resource loading method, comprising:
Obtaining system resources required to be loaded by a system in a target startup phase, and dividing the system resources according to resource types of the system resources to obtain a plurality of grouping units.

Collecting loading durations of each of the grouping units, and dividing the grouping units according to the loading durations to obtain at least two resource groups, wherein the resource groups comprise a first resource group and a second resource group.

Starting a loading process of the system, and performing multi-thread loading of the system resources in the loading process based on the first resource group and the second resource group.

Further, dividing the system resources according to the resource types of the system resources to obtain a plurality of grouping units comprises:
Dividing the system resources according to the resource types to obtain a plurality of class resources and a plurality of basic resources.

Obtaining class package names to which the class resources belong, and grouping the class resources according to the class package names to obtain a plurality of first grouping units.

Obtaining resource attributes of the basic resources, and grouping the basic resources according to the resource attributes to obtain a plurality of second grouping units.

Further, collecting the loading durations of each of the grouping units comprises:
Obtaining sub-loading durations corresponding to each of the system resources.

Performing statistics on the sub-loading durations of the system resources in each of the grouping units to obtain the loading duration of each of the grouping units.

Further, dividing the grouping units according to the loading durations to obtain at least two resource groups, wherein the resource groups comprise a first resource group and a second resource group, comprises:
Constructing a first queue and a second queue, and selecting a target queue from the first queue and the second queue according to a first base duration of the first queue and a second base duration of the second queue.

Selecting, from the plurality of grouping units according to the loading durations, a grouping unit satisfying a preset condition to obtain a target grouping unit, and adding the target grouping unit to the target queue.

If there exists a grouping unit that has not been selected among the plurality of grouping units, updating the base duration of the target queue according to the loading duration, and taking the updated base duration as the base duration of the target queue until no unselected grouping unit exists, and taking the first queue after completion of selection as the first resource group and the second queue after completion of selection as the second resource group.

Further, selecting, from the plurality of grouping units according to the loading durations, a grouping unit satisfying a preset condition to obtain a target grouping unit comprises:
Sorting the plurality of grouping units according to the loading durations to obtain a sorted sequence.

Selecting, from the sorted sequence according to positions of the grouping units in the sorted sequence, a grouping unit satisfying the preset condition as the target grouping unit.

Further, selecting, from the sorted sequence according to positions of the grouping units in the sorted sequence, a grouping unit satisfying the preset condition as the target grouping unit comprises:
Selecting, from the sorted sequence according to positions of the grouping units in the sorted sequence, a grouping unit as a candidate unit.

Determining whether a dependency relationship exists between the candidate unit and a grouping unit in the target queue.

In response to determining that the candidate unit has the dependency relationship with any one of the grouping units in the target queue, determining the candidate unit as the target grouping unit.

Further, dividing the system resources according to the resource types of the system resources to obtain a plurality of grouping units comprises:
Screening candidate resources and driver resources from the system resources.

Dividing the candidate resources according to resource types of the candidate resources to obtain a plurality of grouping units.

Starting the loading process of the system, and performing multi-thread loading of the system resources in the loading process based on the first resource group and the second resource group comprises:
Creating a third resource group corresponding to the driver resources.

Starting the loading process of the system, and performing multi-thread loading of the system resources in the loading process based on the first resource group, the second resource group, and the third resource group.

Correspondingly, embodiments of the present application further provide a system resource loading apparatus, comprising:
Obtaining module, configured to obtain system resources required to be loaded by a system in a target startup phase, and to divide the system resources according to resource types of the system resources to obtain a plurality of grouping units.

A grouping module, configured to collect loading durations of each of the grouping units, and to divide the grouping units according to the loading durations to obtain at least two resource groups, wherein the resource groups comprise a first resource group and a second resource group.

A loading module, configured to start a loading process of the system, and to perform multi-thread loading of the system resources in the loading process based on the first resource group and the second resource group.

In addition, embodiments of the present application further provide an electronic device, comprising a processor and a memory, wherein the memory stores a computer program, and the processor is configured to execute the computer program stored in the memory to implement the system resource loading method provided in embodiments of the present application.

In addition, embodiments of the present application further provide a computer storage medium, wherein the computer storage medium stores a computer program, and the computer program is adapted to be loaded by a processor to execute any of the system resource loading methods provided in embodiments of the present application.

In addition, embodiments of the present application further provide a computer program product, comprising a computer program, wherein when the computer program is executed by a processor, any of the system resource loading methods provided in embodiments of the present application is implemented.

### Beneficial Effects

In embodiments of the present application, system resources required to be loaded by a system in a target startup phase are obtained, and the system resources are divided according to resource types of the system resources to obtain a plurality of grouping units, thereby achieving an initial division of the system resources. Subsequently, loading durations of each of the grouping units are collected, and the grouping units are divided according to the loading durations to obtain at least two resource groups, wherein the resource groups comprise a first resource group and a second resource group, thereby achieving a further precise division of the system resources. Thereafter, a loading process of the system is started, and multi-thread loading of the system resources is performed in the loading process based on the first resource group and the second resource group, thereby achieving precise and efficient division of the system resources, such that while ensuring stable operation of the system, a startup speed of the system is improved and a startup duration of the system is reduced.

### BRIEF DESCRIPTION OF THE DRAWINGS

In order to more clearly illustrate the technical solutions in the embodiments of the present application, the drawings required for describing the embodiments will be briefly introduced below. It is apparent that the drawings described below are merely some embodiments of the present application, and for those skilled in the art, other drawings can also be obtained based on these drawings without creative effort.
FIG. 1 is a schematic flowchart of an embodiment of a system resource loading method provided in the present application.
FIG. 2 is a schematic flowchart of another embodiment of a system resource loading method provided in the present application.
FIG. 3 is a schematic flowchart of another embodiment of a system resource loading method provided in the present application.
FIG. 4 is a schematic structural diagram of a system resource loading apparatus provided in embodiments of the present application.
FIG. 5 is a schematic structural diagram of an electronic device provided in embodiments of the present application.

### DETAILED DESCRIPTION OF THE PREFERRED EMBODIMENTS

The technical solutions in embodiments of the present application will be clearly and completely described below with reference to the drawings in the embodiments of the present application. It is apparent that the described embodiments are merely some, rather than all, embodiments of the present application. All other embodiments obtained by those skilled in the art based on the embodiments of the present application without creative efforts shall fall within the scope of protection of the present application.

Embodiments of the present application provide a system resource loading method, an apparatus, an electronic device, and a computer storage medium. The system resource loading apparatus may be integrated into an electronic device. The electronic device may be a server or a terminal device, or the like.

The server may be an independent physical server, or a server cluster or a distributed system composed of multiple physical servers, or may be a cloud server providing basic cloud computing services such as cloud services, cloud databases, cloud computing, cloud functions, cloud storage, network services, cloud communication, middleware services, domain name services, security services, network acceleration services (Content Delivery Network, CDN), as well as big data and artificial intelligence platforms.

The terminal may be a smart system, a tablet computer, a notebook computer, a desktop computer, a smart speaker, a smart watch, or the like, but is not limited thereto. The terminal and the server may be directly or indirectly connected through wired or wireless communication, which is not limited in the present application.

In addition, in embodiments of the present application, "a plurality of" refers to two or more. Terms such as "first" and "second" in embodiments of the present application are used for distinguishing description, and shall not be understood as indicating or implying relative importance.

The following descriptions are provided in detail. It should be noted that the sequence of the following embodiments does not constitute a limitation on a preferred order of the embodiments.

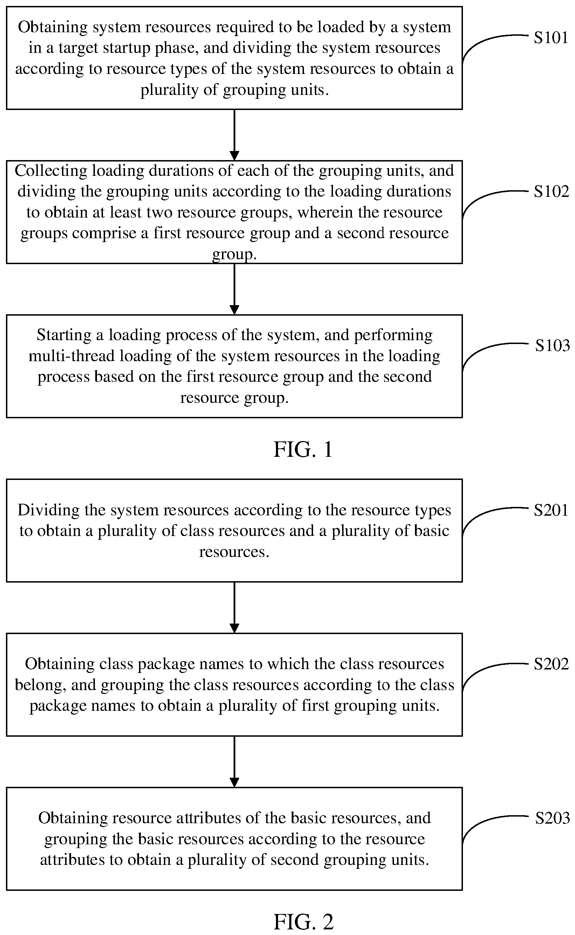

Referring to FIG. 1, FIG. 1 is a schematic flowchart of a system resource loading method provided in an embodiment of the present application. The system resource loading method may comprise:
S101: obtaining system resources required to be loaded by a system in a target startup phase, and dividing the system resources according to resource types of the system resources to obtain a plurality of grouping units.

In this embodiment, before system startup, system resources required to be loaded by the system in the target startup phase are obtained in advance. The target startup phase is a phase in which the system prepares for operation of a virtual machine, such as a Zygote phase in an Android system. In the target startup phase, the system needs to preload resources required for operation of the virtual machine, such as classes, shared object (so) files, jar packages, font graphics libraries, and the like. These system resources are resources required for running the virtual machine corresponding to the system. By dividing all the system resources according to resource types of the system resources, a plurality of grouping units can be obtained. Specifically, the resource types of the system resources may be divided into class resource types and basic types. According to the class resource types and the basic types, the system resources may be divided into a plurality of class resources and a plurality of basic resources. The class (classes) resources are class files required by system services during operation of the virtual machine of the current system, and the basic resources are some basic runtime resources required by the virtual machine of the system, such as graphical runtime resources (Drawables). Thereafter, the class resources and the basic resources are respectively grouped to obtain a plurality of grouping units.

Wherein there are multiple class resources and multiple basic resources. All the class resources may be divided into a plurality of first grouping units according to categories to which the class resources belong, where one category corresponds to one first grouping unit, and one first grouping unit comprises at least one class resource, and class resources in the same first grouping unit correspond to a same category. All the basic resources may be divided into a plurality of second grouping units according to resource types of the basic resources, where one resource type corresponds to one second grouping unit, and one second grouping unit comprises at least one basic resource, and basic resources in the same second grouping unit correspond to a same resource type.

S102: collecting loading durations of each of the grouping units, and dividing the grouping units according to the loading durations to obtain at least two resource groups, wherein the resource groups comprise a first resource group and a second resource group.

In this embodiment, each grouping unit comprises at least one system resource. Sub-loading durations of all system resources in each grouping unit are summed to obtain a loading duration corresponding to each grouping unit. The sub-loading duration of each system resource may be determined by measuring startup loading durations of various class resources and basic resources during a testing process, and the sub-loading durations corresponding to different system resources may be different. After obtaining the loading duration corresponding to each grouping unit, all grouping units are divided according to the loading durations to obtain the first resource group and the second resource group. Specifically, after obtaining the loading durations corresponding to each grouping unit, a grouping set composed of all grouping units is constructed. The grouping set is divided into the first resource group and the second resource group according to the loading durations such that a difference between base durations respectively corresponding to the first resource group and the second resource group falls within a preset range.

In addition, two empty queues, namely a first queue and a second queue, may be constructed. When dividing the grouping set, two grouping units are selected from the grouping set. The two grouping units are respectively assigned to the first queue and the second queue, and loading durations corresponding to the two grouping units are respectively used as initial base durations of the first queue and the second queue. Thereafter, the base durations of the first queue and the second queue are compared, and a target queue is selected from the first queue and the second queue according to a comparison result. A grouping unit is selected from remaining grouping units in the grouping set other than the two grouping units as a target grouping unit, and the target grouping unit is added to the target queue. Each time a target grouping unit is assigned, the base duration of the target queue is updated, where the base duration of the target queue is a cumulative loading duration of all grouping units in the target queue. The base duration of the current target queue is compared with a base duration of the other queue, and the target queue is selected again according to a comparison result. Another target grouping unit is selected from the grouping set and added to the currently selected target queue, until all grouping units in the grouping set are assigned to corresponding queues. In this way, division of the grouping set is completed, and the first queue after completion of division serves as the first resource group, and the second queue after completion of division serves as the second resource group.

S103: starting a loading process of the system, and performing multi-thread loading of the system resources in the loading process based on the first resource group and the second resource group.

In this embodiment, the loading process of the system is a process corresponding to the target startup phase of the system, such as a process corresponding to a Zygote phase in an Android system. In the process corresponding to the target startup phase, resources in the first resource group and resources in the second resource group are loaded simultaneously, thereby achieving rapid loading of all system resources. Specifically, first loading tasks corresponding to all system resources in the first resource group and a first loading thread corresponding to the first resource group are created; and second loading tasks corresponding to all system resources in the second resource group and a second loading thread corresponding to the second resource group are created. When the loading process of the system is started, the first loading thread and the second loading thread are run in parallel in the loading process, and the first loading tasks and the second loading tasks are executed in parallel based on the first loading thread and the second loading thread. In this way, rapid loading of system resources in the loading process during system startup is achieved.

The system resource loading method proposed in the present application obtains all system resources required to be loaded by the system in the target startup phase, divides the system resources according to resource types of the system resources to obtain a plurality of grouping units; then collects loading durations of each grouping unit and divides the grouping units according to the loading durations to obtain a first resource group and a second resource group; and thereafter starts the loading process of the system and performs multi-thread loading of the system resources in the loading process based on the first resource group and the second resource group, thereby achieving precise and efficient division of system resources, and improving system startup speed and reducing system startup duration while ensuring stable operation of the system.

As shown in FIG. 2, FIG. 2 is a schematic flowchart of another embodiment provided in the present application. In some embodiments of the present application, dividing the system resources according to the resource types of the system resources to obtain a plurality of grouping units comprises:
S201: dividing the system resources according to the resource types to obtain a plurality of class resources and a plurality of basic resources.

S202: obtaining class package names to which the class resources belong, and grouping the class resources according to the class package names to obtain a plurality of first grouping units.

S203: obtaining resource attributes of the basic resources, and grouping the basic resources according to the resource attributes to obtain a plurality of second grouping units.

In this embodiment, system resources are divided according to resource types to obtain class resources and basic resources. Class package (pkg) names to which the class resources belong are obtained, and the class package names are used to determine packages to which the respective class resources belong, thereby obtaining first grouping units of the class resources. Specifically, the class resources are grouped according to the class package names to obtain first grouping units corresponding to different class package names, wherein all class resources in the same first grouping unit correspond to a same class package name. Resource attributes of the basic resources are obtained, and the basic resources are grouped according to the resource attributes to obtain a plurality of second grouping units corresponding to different resource attributes. The resource attributes of the basic resources may be determined according to file names of the basic resources or source libraries of the basic resources, and all basic resources in the same second grouping unit correspond to a same resource attribute.

In this embodiment, system resources are divided into class resources and basic resources according to resource types, and then the class resources and the basic resources are respectively divided according to class package names and resource attributes to obtain first grouping units and second grouping units, thereby achieving preliminary grouping of the class resources and the basic resources, improving grouping precision and accuracy of the system resources, and avoiding instability of system operation caused by unclear grouping.

In some embodiments of the present application, collecting the loading durations of each of the grouping units comprises:
Obtaining sub-loading durations corresponding to each of the system resources.

Performing statistics on the sub-loading durations of the system resources in each of the grouping units to obtain the loading duration of each of the grouping units.

In this embodiment, the sub-loading duration is a loading duration required by each system resource in the target startup phase. Sub-loading durations corresponding to each system resource are obtained, and then statistics are performed on the sub-loading durations of the system resources in each grouping unit to obtain the loading duration of each grouping unit. In one implementation, while grouping class resources in the system resources, loading durations of grouping units corresponding to the class resources may also be calculated. Specifically, when determining all class resources in the system resources, the class resources are loaded sequentially. Each time a class resource is loaded, it is determined whether the class resource and a previously loaded class resource belong to a same category. If the current class resource and the previously loaded class resource belong to the same category, the sub-loading duration of the current class resource is accumulated with the sub-loading duration of the previously loaded class resource of the same category to obtain the loading duration of the grouping unit corresponding to the current category. If the current class resource and the previously loaded class resource do not belong to the same category, a new variable corresponding to the category of the current class resource is created, and the new variable corresponds to a new grouping unit. Sub-loading durations of class resources belonging to the new variable are accumulated to obtain the loading duration of the grouping unit corresponding to the new variable. All class resources are sequentially loaded, and category determination is performed between the current class resource and the previously loaded class resource. Sub-loading durations of class resources belonging to the same category are accumulated, while for class resources belonging to different categories, new variables are created, until all class resources are loaded. In this way, grouping of all class resources and calculation of loading durations of each grouping unit are completed.

In this embodiment, by obtaining sub-loading durations corresponding to each system resource and then performing statistics on the sub-loading durations of the system resources in each grouping unit to obtain loading durations of the grouping units, precise and efficient statistics of loading durations of the grouping units are achieved, thereby further improving system startup speed.

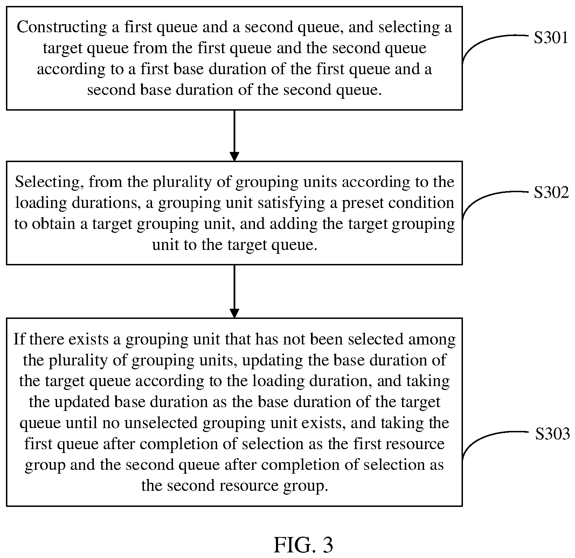

As shown in FIG. 3, FIG. 3 is a schematic flowchart of another embodiment provided in the present application. In some embodiments of the present application, dividing the grouping units according to the loading durations to obtain at least two resource groups, wherein the resource groups comprise a first resource group and a second resource group, comprises:
S301: constructing a first queue and a second queue, and selecting a target queue from the first queue and the second queue according to a first base duration of the first queue and a second base duration of the second queue.

S302: selecting, from the plurality of grouping units according to the loading durations, a grouping unit satisfying a preset condition to obtain a target grouping unit, and adding the target grouping unit to the target queue.

S303: if there exists a grouping unit that has not been selected among the plurality of grouping units, updating the base duration of the target queue according to the loading duration, and taking the updated base duration as the base duration of the target queue until no unselected grouping unit exists, and taking the first queue after completion of selection as the first resource group and the second queue after completion of selection as the second resource group.

In this embodiment, the first queue and the second queue are two empty queues preset in advance. The first queue and the second queue respectively correspond to different base durations, wherein the first queue corresponds to a first base duration, and the second queue corresponds to a second base duration. The base durations may be preset durations. The first queue and the second queue are constructed, and a target queue is selected from the first queue and the second queue according to the first base duration and the second base duration. Specifically, the first base duration and the second base duration are compared. If the first base duration is greater than the second base duration, the second queue is determined as the target queue; if the second base duration is greater than the first base duration, the first queue is determined as the target queue. In an initial state (that is, when no grouping unit has been assigned to any queue), the base durations of the first queue and the second queue are preset durations.

Thereafter, according to the loading duration of each grouping unit, a grouping unit satisfying a preset condition is selected from the plurality of grouping units and added to the target queue. The grouping unit satisfying the preset condition is the target grouping unit. Specifically, all grouping units are sorted according to the loading durations to obtain a sorted sequence, and a grouping unit whose position in the sorted sequence satisfies a preset target position is selected as the target grouping unit. For example, a grouping unit at a first position in the sorted sequence may be selected as the target grouping unit. The target grouping unit is added to the target queue.

After the target grouping unit is added to the target queue, it is determined whether there exists a grouping unit that has not been selected among the plurality of grouping units. If there exists a grouping unit that has not been selected, the base duration of the target queue is updated according to the loading duration, and the updated base duration is taken as the base duration of the target queue until no unselected grouping unit exists. Specifically, when there exists a grouping unit that has not been selected, the loading duration corresponding to the selected target grouping unit is obtained, and the loading duration is accumulated with the base duration of the target queue to obtain an updated base duration. The updated base duration is taken as the base duration of the target queue. When the target queue is the first queue, the base duration of the target queue is the first base duration; when the target queue is the second queue, the base duration of the target queue is the second base duration. Thereafter, the step of selecting a target queue from the first queue and the second queue according to the first base duration and the second base duration is performed again until all grouping units have been selected. If no unselected grouping unit exists among the plurality of grouping units, it indicates that all grouping units have been selected, and the first queue after completion of selection is taken as the first resource group, and the second queue after completion of selection is taken as the second resource group.

For example, when the first base duration corresponding to the first queue and the second base duration corresponding to the second queue are obtained for the first time, if the first base duration is greater than the second base duration, the second queue is determined as the target queue. A first grouping unit is selected from all grouping units according to a sequence of the grouping units as the target grouping unit, and the target grouping unit is assigned to the second queue. Thereafter, it is determined whether there exists a grouping unit that has not been selected among the plurality of grouping units. If there exists such a grouping unit, the loading duration corresponding to the target grouping unit is accumulated with the second base duration of the second queue to obtain an updated second base duration, and the updated second base duration is taken as the second base duration of the second queue. Then, the first base duration and the second base duration are compared again. If the second base duration is greater than the first base duration, the first queue is determined as the target queue. A second grouping unit is selected from all grouping units according to the sequence of the grouping units as the target grouping unit, and the target grouping unit is assigned to the first queue. It is then determined whether there exists a grouping unit that has not been selected. If there exists such a grouping unit, the loading duration corresponding to the target grouping unit is accumulated with the first base duration of the first queue to obtain an updated first base duration, and the updated first base duration is taken as the first base duration of the first queue, until all grouping units have been selected and no unselected grouping unit exists. The first resource group is the first queue after completion of division, and the second resource group is the second queue after completion of division.

This embodiment achieves precise and efficient division of the grouping units, thereby improving system startup speed.

In some embodiments of the present application, selecting, from the plurality of grouping units according to the loading durations, a grouping unit satisfying a preset condition to obtain a target grouping unit comprises:
Sorting the plurality of grouping units according to the loading durations to obtain a sorted sequence.

Selecting, from the sorted sequence according to positions of the grouping units in the sorted sequence, a grouping unit satisfying the preset condition as the target grouping unit.

In this embodiment, there are a plurality of grouping units. The grouping units are sorted according to loading durations corresponding to the grouping units to obtain a sorted sequence. Specifically, a grouping unit corresponding to a minimum loading duration among all grouping units is obtained, and the grouping unit corresponding to the minimum loading duration is taken as a first grouping unit. All grouping units are arranged in ascending order according to the loading durations to obtain the sorted sequence. Alternatively, a grouping unit corresponding to a maximum loading duration among all grouping units may be obtained, and the grouping unit corresponding to the maximum loading duration is taken as a first grouping unit. All grouping units are arranged in descending order according to the loading durations to obtain the sorted sequence. After obtaining the sorted sequence, a grouping unit satisfying a preset condition is selected from the sorted sequence according to positions of the grouping units in the sorted sequence as the target grouping unit. The preset condition may be a preset target position. A grouping unit at the preset target position in the sorted sequence is selected as the target grouping unit.

In this embodiment, by sorting the grouping units according to the loading durations to obtain the sorted sequence, and selecting, from the sorted sequence according to positions of the grouping units in the sorted sequence, a grouping unit satisfying the preset condition as the target grouping unit, rapid sorting of the grouping units is achieved, thereby improving selection efficiency of the target grouping unit.

In some embodiments of the present application, selecting, from the sorted sequence according to positions of the grouping units in the sorted sequence, a grouping unit satisfying the preset condition as the target grouping unit comprises:
Selecting, from the sorted sequence according to positions of the grouping units in the sorted sequence, a grouping unit as a candidate unit.

Determining whether a dependency relationship exists between the candidate unit and a grouping unit in the target queue.

In response to determining that the candidate unit has the dependency relationship with any one of the grouping units in the target queue, determining the candidate unit as the target grouping unit.

In this embodiment, a queue corresponding to a grouping unit may further be determined according to a dependency relationship. Specifically, each grouping unit in the sorted sequence has a corresponding sequence number, and a position of the candidate unit in the sorted sequence may be determined according to the sequence number. When selecting a grouping unit from the sorted sequence, grouping units may be sequentially selected according to sequence numbers in the sorted sequence, from small to large or from large to small, and each selected grouping unit is taken as a candidate unit. Each time a selection is completed, the sorted sequence is updated, that is, the selected grouping unit is removed from the sorted sequence to obtain an updated sorted sequence. In a next selection, a remaining grouping unit is selected from the updated sorted sequence. Therefore, when selecting grouping units in ascending order, the grouping unit selected each time is a first grouping unit in the current sorted sequence; and when selecting grouping units in descending order, the grouping unit selected each time is a last grouping unit in the current sorted sequence. Alternatively, grouping units may also be selected from a middle position or other positions in the sorted sequence to obtain the candidate unit.

After selecting the candidate unit from the sorted sequence, it is determined whether a dependency relationship exists between the candidate unit and a grouping unit in the target queue. Specifically, the dependency relationship is a relationship between the candidate unit and an existing grouping unit in the target queue. If the candidate unit has a dependency relationship with any existing grouping unit in the target queue, the candidate unit is assigned to the target queue. If the candidate unit does not have a dependency relationship with any existing grouping unit in the target queue, the candidate unit is assigned to another queue other than the target queue.

In this embodiment, by selecting a candidate unit from the sorted sequence and determining a dependency relationship between the candidate unit and grouping units in the target queue, candidate units having dependency relationships can be assigned to the same queue, thereby enabling better stability when the system forms the first resource group and the second resource group during operation.

In some embodiments of the present application, dividing the system resources according to the resource types of the system resources to obtain a plurality of grouping units comprises:
Screening candidate resources and driver resources from the system resources.

Dividing the candidate resources according to resource types of the candidate resources to obtain a plurality of grouping units.

Starting the loading process of the system, and performing multi-thread loading of the system resources in the loading process based on the first resource group and the second resource group comprises:
Creating a third resource group corresponding to the driver resources.

Starting the loading process of the system, and performing multi-thread loading of the system resources in the loading process based on the first resource group, the second resource group, and the third resource group.

In this embodiment, in order to more precisely divide the system resources, when obtaining the system resources required to be loaded in the target startup phase, candidate resources and driver resources are screened from the system resources. The candidate resources include class resources and basic resources, and the driver resources are resources other than the class resources and the basic resources among the system resources in the target startup phase. The driver resources specifically include resources such as system fonts, drivers, and shared objects (so, shared object). In addition, the driver resources may also be divided into the basic resources of the candidate resources. When the driver resources are divided into the basic resources, it is unnecessary to screen candidate resources and driver resources from the system resources. Instead, all system resources are directly divided according to resource types corresponding to the system resources to obtain grouping units, and the grouping units are processed according to loading durations.

When the candidate resources and the driver resources are obtained, for the candidate resources, the candidate resources are divided according to resource types of the candidate resources to obtain a plurality of grouping units, loading durations of each grouping unit are collected, and the grouping units are divided according to the loading durations to obtain a first resource group and a second resource group finally divided from the candidate resources. For the driver resources, a third resource group corresponding to the driver resources is created. When loading the system resources, loading threads respectively corresponding to the first resource group, the second resource group, and the third resource group are created, and the loading threads corresponding to the three resource groups are run in parallel in the loading process, thereby achieving rapid loading of all system resources.

In this embodiment, by screening candidate resources and driver resources from the system resources, respectively processing the candidate resources and the driver resources, and then performing multi-thread parallel loading on the first resource group and the second resource group corresponding to the candidate resources and the third resource group corresponding to the driver resources, precise loading of the system resources is achieved, and grouping precision and loading speed of the system resources are further improved.

In order to facilitate better implementation of the system resource loading method provided in embodiments of the present application, embodiments of the present application further provide an apparatus based on the above system resource loading method. Meanings of terms are the same as those in the above system resource loading method, and specific implementation details may refer to descriptions in the method embodiments.

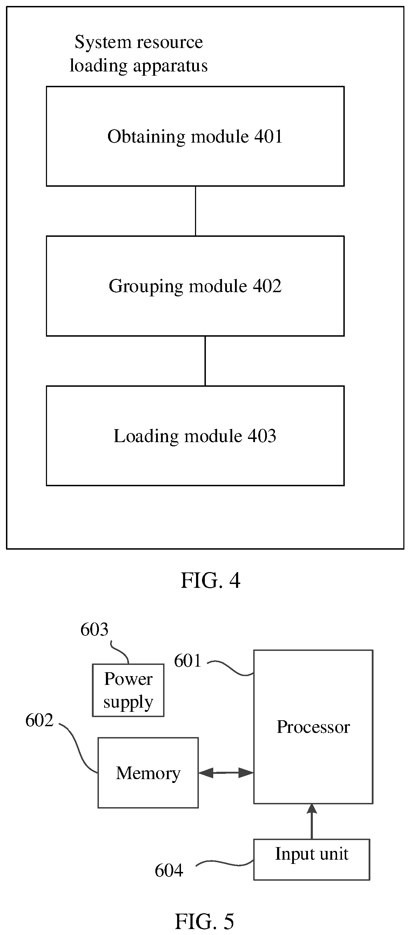

For example, as shown in FIG. 4, the system resource loading apparatus may comprise: an obtaining module 401, a grouping module 402, and a loading module 403.

The obtaining module 401 is configured to obtain system resources required to be loaded by a system in a target startup phase, and to divide the system resources according to resource types of the system resources to obtain a plurality of grouping units.

The grouping module 402 is configured to collect loading durations of each of the grouping units, and to divide the grouping units according to the loading durations to obtain at least two resource groups, wherein the resource groups comprise a first resource group and a second resource group.

The loading module 403 is configured to start a loading process of the system, and to perform multi-thread loading of the system resources in the loading process based on the first resource group and the second resource group.

In one embodiment of the present application, the obtaining module 401 comprises:
A dividing unit, configured to divide the system resources according to the resource types to obtain a plurality of class resources and a plurality of basic resources.

A first grouping unit, configured to obtain class package names to which the class resources belong, and to group the class resources according to the class package names to obtain a plurality of first grouping units.

A second grouping unit, configured to obtain resource attributes of the basic resources, and to group the basic resources according to the resource attributes to obtain a plurality of second grouping units.

In one embodiment of the present application, the grouping module 402 comprises:
An obtaining unit, configured to obtain sub-loading durations corresponding to each of the system resources.

A statistics unit, configured to perform statistics on the sub-loading durations of the system resources in each of the grouping units to obtain the loading duration of each of the grouping units.

In one embodiment of the present application, the grouping module 402 comprises:
A constructing unit, configured to construct a first queue and a second queue, and to select a target queue from the first queue and the second queue according to a first base duration of the first queue and a second base duration of the second queue.

A selecting unit, configured to select, from the plurality of grouping units according to the loading durations, a grouping unit satisfying a preset condition to obtain a target grouping unit, and to add the target grouping unit to the target queue.

An updating unit, configured to, in response to there existing a grouping unit that has not been selected among the plurality of grouping units, update the base duration of the target queue according to the loading duration, and take the updated base duration as the base duration of the target queue until no unselected grouping unit exists, and to take the first queue after completion of selection as the first resource group and the second queue after completion of selection as the second resource group.

In one embodiment of the present application, the selecting unit comprises:
A sorting unit, configured to sort the plurality of grouping units according to the loading durations to obtain a sorted sequence.

A selecting sub-unit, configured to select, from the sorted sequence according to positions of the grouping units in the sorted sequence, a grouping unit satisfying a preset condition as the target grouping unit.

In one embodiment of the present application, the selecting sub-unit comprises:
A candidate unit, configured to select, from the sorted sequence according to positions of the grouping units in the sorted sequence, a grouping unit as a candidate unit.

A dependency determination unit, configured to determine whether a dependency relationship exists between the candidate unit and a grouping unit in the target queue.

A target determination unit, configured to, in response to determining that the candidate unit has the dependency relationship with any one of the grouping units in the target queue, determine the candidate unit as the target grouping unit.

In one embodiment of the present application, the system resource loading apparatus further comprises:
A screening unit, configured to screen candidate resources and driver resources from the system resources.

An initial dividing unit, configured to divide the candidate resources according to resource types of the candidate resources to obtain a plurality of grouping units.

A creating unit, configured to create a third resource group corresponding to the driver resources.

A loading unit, configured to start a loading process of the system, and to perform multi-thread loading of the system resources in the loading process based on the first resource group, the second resource group, and the third resource group.

The system resource loading apparatus provided in the present application achieves precise and efficient division of system resources, thereby improving system startup speed and reducing system startup duration while ensuring stable operation of the system.

In specific implementations, the above modules may be implemented as independent entities, or may be arbitrarily combined and implemented as one or more entities. Specific implementation manners and corresponding beneficial effects of the above modules may refer to the foregoing method embodiments and will not be repeated herein.

Embodiments of the present application further provide an electronic device, which may be a server or a terminal device. As shown in FIG. 5, FIG. 5 illustrates a schematic structural diagram of an electronic device involved in embodiments of the present application. Specifically:
The electronic device may comprise a processor 601 having one or more processing cores, a memory 602 having one or more computer storage media, a power supply 603, and an input unit 604. Those skilled in the art can understand that the electronic device structure shown in FIG. 5 does not constitute a limitation on the electronic device, and may include more or fewer components than illustrated, or may combine certain components, or may have different component arrangements.

The processor 601 is a control center of the electronic device, and connects various parts of the entire electronic device through various interfaces and lines. By running or executing a computer program and/or modules stored in the memory 602, and invoking data stored in the memory 602, the processor 601 performs various functions of the electronic device and processes data. Optionally, the processor 601 may include one or more processing cores. Preferably, the processor 601 may integrate an application processor and a modem processor, wherein the application processor mainly processes an operating system, a user interface, and application programs, and the modem processor mainly processes wireless communication. It should be understood that the above modem processor may also not be integrated into the processor 601.

The memory 602 may be used to store computer programs and modules. The processor 601 executes various functional applications and data processing by running the computer programs and modules stored in the memory 602. The memory 602 may mainly include a program storage area and a data storage area, wherein the program storage area may store an operating system, computer programs required for at least one function (such as an audio playback function, an image playback function, etc.), and the like; and the data storage area may store data created according to use of the electronic device. In addition, the memory 602 may include a high-speed random access memory, and may further include a non-volatile memory, such as at least one magnetic disk storage device, a flash memory device, or other volatile solid-state storage devices. Correspondingly, the memory 602 may further include a memory controller to provide the processor 601 with access to the memory 602.

The electronic device further includes a power supply 603 for supplying power to various components. Preferably, the power supply 603 may be logically connected to the processor 601 through a power management system, so that functions such as charge management, discharge management, and power consumption management are implemented through the power management system. The power supply 603 may further include any component such as one or more direct current (DC) or alternating current (AC) power sources, a rechargeable system, a power failure detection circuit, a power converter or inverter, and a power status indicator.

The electronic device may further include an input unit 604, configured to receive input digital or character information and generate signal inputs related to user settings and function control, such as signals from a keyboard, a mouse, a joystick, optical input, or a trackball.

Although not shown, the electronic device may further include a display unit and the like, which will not be described herein. In this embodiment, the processor 601 in the electronic device loads executable files corresponding to processes of one or more computer programs into the memory 602 according to the following instructions, and runs the computer programs stored in the memory 602 to implement various functions, such as:
Obtaining system resources required to be loaded by a system in a target startup phase, and dividing the system resources according to resource types of the system resources to obtain a plurality of grouping units.

Collecting loading durations of each of the grouping units, and dividing the grouping units according to the loading durations to obtain at least two resource groups, wherein the resource groups comprise a first resource group and a second resource group.

Starting a loading process of the system, and performing multi-thread loading of the system resources in the loading process based on the first resource group and the second resource group.

The electronic device provided in the present application achieves precise and efficient division of system resources, thereby improving system startup speed and reducing system startup duration while ensuring stable operation of the system.

Specific implementation manners of the above operations and corresponding beneficial effects may refer to the detailed description of the system resource loading method above and will not be repeated herein.

Those of ordinary skill in the art may understand that all or part of the steps in the various methods of the above embodiments may be completed by a computer program, or may be completed by controlling related hardware through a computer program. The computer program may be stored in a computer storage medium and loaded and executed by a processor.

Accordingly, embodiments of the present application further provide a computer storage medium, wherein the computer storage medium stores a computer program, and the computer program can be loaded by a processor to execute the steps in any of the system resource loading methods provided in embodiments of the present application. For example, the computer program may execute the following steps:
Obtaining system resources required to be loaded by a system in a target startup phase, and dividing the system resources according to resource types of the system resources to obtain a plurality of grouping units.

Collecting loading durations of each of the grouping units, and dividing the grouping units according to the loading durations to obtain at least two resource groups, wherein the resource groups comprise a first resource group and a second resource group.

Starting a loading process of the system, and performing multi-thread loading of the system resources in the loading process based on the first resource group and the second resource group.

The computer storage medium provided in the present application achieves precise and efficient division of system resources, thereby improving system startup speed and reducing system startup duration while ensuring stable operation of the system.

Specific implementation manners of the above operations and corresponding beneficial effects may refer to the foregoing embodiments and will not be repeated herein.

The computer storage medium may include: a read-only memory (ROM), a random access memory (RAM), a magnetic disk, or an optical disk, and the like.

Since the computer program stored in the computer storage medium can execute the steps in any of the system resource loading methods provided in embodiments of the present application, beneficial effects achieved by any of the system resource loading methods provided in embodiments of the present application can be realized, which are described in detail in the foregoing embodiments and will not be repeated herein.

According to an aspect of the present application, a computer program product or a computer program is provided. The computer program product or the computer program comprises computer instructions, and the computer instructions are stored in a computer storage medium. A processor of a computer device reads the computer instructions from the computer storage medium and executes the computer instructions, so that the computer device performs the above system resource loading method.

The above provides a detailed description of a system resource loading method, an apparatus, an electronic device, and a computer storage medium provided in embodiments of the present application. Specific examples are used herein to illustrate the principles and implementation manners of the present application. The description of the above embodiments is merely intended to facilitate understanding of the method and core ideas of the present application. Meanwhile, those skilled in the art may make changes in specific implementation manners and application scope based on the idea of the present application. In summary, the contents of this specification shall not be construed as limiting the present application.

## Claims

1. A system resource loading method, comprising:
obtaining system resources required to be loaded by a system in a target startup phase, and dividing the system resources according to resource types of the system resources to obtain a plurality of grouping units;
collecting loading durations of each of the grouping units, and dividing the grouping units according to the loading durations to obtain at least two resource groups, wherein the resource groups comprise a first resource group and a second resource group;
starting a loading process of the system, and performing multi-thread loading of the system resources in the loading process based on the first resource group and the second resource group.

2. The system resource loading method according to claim 1, wherein dividing the system resources according to the resource types of the system resources to obtain a plurality of grouping units comprises:
dividing the system resources according to the resource types to obtain a plurality of class resources and a plurality of basic resources;
obtaining class package names to which the class resources belong, and grouping the class resources according to the class package names to obtain a plurality of first grouping units;
obtaining resource attributes of the basic resources, and grouping the basic resources according to the resource attributes to obtain a plurality of second grouping units.

3. The system resource loading method according to claim 1, wherein collecting the loading durations of each of the grouping units comprises:
obtaining sub-loading durations corresponding to each of the system resources;
performing statistics on the sub-loading durations of the system resources in each of the grouping units to obtain the loading duration of each of the grouping units.

4. The system resource loading method according to claim 3, wherein performing statistics on the sub-loading durations of the system resources in each of the grouping units to obtain the loading duration of each of the grouping units comprises:
summing the sub-loading durations of the system resources in each of the grouping units to obtain the loading duration of each of the grouping units.

5. The system resource loading method according to claim 1, wherein dividing the grouping units according to the loading durations to obtain at least two resource groups, wherein the resource groups comprise a first resource group and a second resource group, comprises:
constructing a first queue and a second queue, and selecting a target queue from the first queue and the second queue according to a first base duration of the first queue and a second base duration of the second queue;
selecting, from the plurality of grouping units according to the loading durations, a grouping unit satisfying a preset condition to obtain a target grouping unit, and adding the target grouping unit to the target queue;
if there exists a grouping unit that has not been selected among the plurality of grouping units, updating the base duration of the target queue according to the loading duration, and taking the updated base duration as the base duration of the target queue, until no unselected grouping unit exists; and taking the first queue after completion of selection as the first resource group, and taking the second queue after completion of selection as the second resource group.

6. The system resource loading method according to claim 5, wherein constructing the first queue and the second queue comprises:
selecting two of the grouping units, and respectively assigning the two grouping units to the first queue and the second queue.

7. The system resource loading method according to claim 6, wherein the first base duration comprises a loading duration of the grouping unit corresponding to the first queue; and
the second base duration comprises a loading duration of the grouping unit corresponding to the second queue.

8. The system resource loading method according to claim 5, wherein selecting, from the plurality of grouping units according to the loading durations, a grouping unit satisfying a preset condition to obtain a target grouping unit comprises:
sorting the plurality of grouping units according to the loading durations to obtain a sorted sequence; and
selecting, from the sorted sequence according to positions of the grouping units in the sorted sequence, a grouping unit satisfying the preset condition as the target grouping unit.

9. The system resource loading method according to claim 8, wherein selecting, from the sorted sequence according to positions of the grouping units in the sorted sequence, a grouping unit satisfying the preset condition as the target grouping unit comprises:
selecting, from the sorted sequence according to positions of the grouping units in the sorted sequence, a grouping unit as a candidate unit;
determining whether a dependency relationship exists between the candidate unit and a grouping unit in the target queue; and
in response to determining that the candidate unit has the dependency relationship with any one of the grouping units in the target queue, determining the candidate unit as the target grouping unit.

10. The system resource loading method according to claim 1, wherein dividing the system resources according to the resource types of the system resources to obtain a plurality of grouping units comprises:
screening candidate resources and driver resources from the system resources;
dividing the candidate resources according to resource types of the candidate resources to obtain a plurality of grouping units;
wherein starting the loading process of the system, and performing multi-thread loading of the system resources in the loading process based on the first resource group and the second resource group comprises:
creating a third resource group corresponding to the driver resources; and
starting the loading process of the system, and performing multi-thread loading of the system resources in the loading process based on the first resource group, the second resource group, and the third resource group.

11. The system resource loading method according to claim 1, wherein starting the loading process of the system, and performing multi-thread loading of the system resources in the loading process based on the first resource group and the second resource group comprises:
creating first loading tasks corresponding to the system resources in the first resource group, and a first loading thread corresponding to the first resource group;
creating second loading tasks corresponding to the system resources in the second resource group, and a second loading thread corresponding to the second resource group; and
running the first loading thread and the second loading thread in parallel in the loading process, and executing the first loading tasks and the second loading tasks in parallel based on the first loading thread and the second loading thread.

12. A system resource loading apparatus, comprising:
an obtaining module, configured to obtain system resources required to be loaded by a system in a target startup phase, and to divide the system resources according to resource types of the system resources to obtain a plurality of grouping units;
a grouping module, configured to collect loading durations of each of the grouping units, and to divide the grouping units according to the loading durations to obtain at least two resource groups, wherein the resource groups comprise a first resource group and a second resource group; and
a loading module, configured to start a loading process of the system, and to perform multi-thread loading of the system resources in the loading process based on the first resource group and the second resource group.

13. The system resource loading apparatus according to claim 12, wherein the obtaining module comprises:
a dividing unit, configured to divide the system resources according to the resource types to obtain a plurality of class resources and a plurality of basic resources;
a first grouping unit, configured to obtain class package names to which the class resources belong, and to group the class resources according to the class package names to obtain a plurality of first grouping units; and
a second grouping unit, configured to obtain resource attributes of the basic resources, and to group the basic resources according to the resource attributes to obtain a plurality of second grouping units.

14. The system resource loading apparatus according to claim 12, wherein the grouping module comprises:
an obtaining unit, configured to obtain sub-loading durations corresponding to each of the system resources; and
a statistics unit, configured to perform statistics on the sub-loading durations of the system resources in each of the grouping units to obtain the loading duration of each of the grouping units.

15. The system resource loading apparatus according to claim 12, wherein the grouping module comprises:
a constructing unit, configured to construct a first queue and a second queue, and to select a target queue from the first queue and the second queue according to a first base duration of the first queue and a second base duration of the second queue;
a selecting unit, configured to select, from the plurality of grouping units according to the loading durations, a grouping unit satisfying a preset condition to obtain a target grouping unit, and to add the target grouping unit to the target queue; and
an updating unit, configured to, in response to there existing a grouping unit that has not been selected among the plurality of grouping units, update the base duration of the target queue according to the loading duration, and take the updated base duration as the base duration of the target queue until no unselected grouping unit exists, and to take the first queue after completion of selection as the first resource group and the second queue after completion of selection as the second resource group.

16. The system resource loading apparatus according to claim 15, wherein the selecting unit comprises:
a sorting unit, configured to sort the plurality of grouping units according to the loading durations to obtain a sorted sequence; and
a selecting sub-unit, configured to select, from the sorted sequence according to positions of the grouping units in the sorted sequence, a grouping unit satisfying a preset condition as the target grouping unit..

17. The system resource loading apparatus according to claim 16, wherein the selecting sub-unit comprises:
a candidate unit, configured to select, from the sorted sequence according to positions of the grouping units in the sorted sequence, a grouping unit as a candidate unit;
a dependency determination unit, configured to determine whether a dependency relationship exists between the candidate unit and a grouping unit in the target queue; and
a target determination unit, configured to, in response to determining that the candidate unit has the dependency relationship with any one of the grouping units in the target queue, determine the candidate unit as the target grouping unit.

18. The system resource loading apparatus according to claim 12, wherein the apparatus further comprises:
a screening unit, configured to screen candidate resources and driver resources from the system resources;
an initial dividing unit, configured to divide the candidate resources according to resource types of the candidate resources to obtain a plurality of grouping units;
a creating unit, configured to create a third resource group corresponding to the driver resources; and
a loading unit, configured to start a loading process of the system, and to perform multi-thread loading of the system resources in the loading process based on the first resource group, the second resource group, and the third resource group.

19. An electronic device, wherein the electronic device comprises a processor and a memory, the memory stores a computer program, and the processor is configured to execute the computer program stored in the memory to perform the system resource loading method according to any one of claims 1 to 11.

20. A computer storage medium, wherein the computer storage medium stores a computer program, and the computer program is adapted to be loaded by a processor to perform the system resource loading method according to any one of claims 1 to 11.
